(19) Europäisches Patentamt
European Patent Office
Office européen des brevets

(11) EP 1 980 589 B1

# (12) EUROPEAN PATENT SPECIFICATION

(45) Date of publication and mention of the grant of the patent:
**20.12.2017 Bulletin 2017/51**

(21) Application number: **07707971.3**

(22) Date of filing: **02.02.2007**

(51) Int Cl.:
***C08L 15/00*** (2006.01) ***C08K 3/04*** (2006.01)
***C08K 3/36*** (2006.01)

(86) International application number:
**PCT/JP2007/051822**

(87) International publication number:
**WO 2007/088980 (09.08.2007 Gazette 2007/32)**

## (54) HYDROGENATED DIENE POLYMER COMPOSITION AND RUBBER MOLDED ARTICLE

GEHÄRTETE DIENPOLYMERZUSAMMENSETZUNG UND DARAUS GEFORMTER GUMMIARTIKEL

COMPOSITION DE POLYMÈRE DIÉNIQUE HYDROGÉNÉ ET ARTICLE MOULÉ EN CAOUTCHOUC

(84) Designated Contracting States:
**DE FR GB**

(30) Priority: **02.02.2006 JP 2006026048**
**16.03.2006 JP 2006073219**

(43) Date of publication of application:
**15.10.2008 Bulletin 2008/42**

(60) Divisional application:
**16206571.8 / 3 173 441**

(73) Proprietor: **JSR Corporation**
**Tokyo 104-8410 (JP)**

(72) Inventors:
- **SUZUKI, Takahisa**
**Chuo-ku, Tokyo, 104-8410 (JP)**
- **HIGUCHI, Motoharu**
**Chuo-ku, Tokyo, 104-8410 (JP)**
- **HASEGAWA, Kenji**
**Chuo-ku, Tokyo, 104-8410 (JP)**
- **NOSAKA, Naoya**
**Chuo-ku, Tokyo, 104-8410 (JP)**

(74) Representative: **TBK**
**Bavariaring 4-6**
**80336 München (DE)**

(56) References cited:
**EP-A1- 1 306 393**
**WO-A1-02/083746**
**WO-A1-03/085010**
**JP-A- 02 070 735**
**JP-A- 04 139 219**
**JP-A- 04 255 734**
**JP-A- 05 125 108**
**JP-A- 05 125 225**
**JP-A- 06 299 001**
**JP-A- 06 313 013**
**JP-A- 09 194 636**
**JP-A- 2003 246 817**
**US-A1- 2005 171 276**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 980 589 B1

**Description**

TECHNICAL FIELD

The present invention relates to a hydrogenated diene polymer composition and a molded rubber article. More particularly, the present invention relates to a hydrogenated diene polymer composition which can produce a molded rubber article with excellent vibration proofing properties and to a molded rubber article with excellent vibration proofing properties.

BACKGROUND ART

Diene rubbers including natural rubber (NR) have sufficient mechanical characteristics and excellent fatigue characteristics. Therefore, the diene rubbers are abundantly used for vibration proofing and the like. In many cases, such a vibration proofing rubber is used under various stringent environments such as high temperature conditions. For example, when used as a vibration proofing rubber for engine compartments of vehicles, the rubber will be exposed to high temperature conditions due to a temperature rise in the engine compartments. The vibration proofing rubber used in a high temperature environment must have sufficient heat resistance in addition to vibration proofing properties. However, the diene rubbers which have been abundantly used as a vibration proofing rubber in the past are not necessarily sufficiently resistant to heat. It has been difficult to use a diene rubber in a high temperature environment. Therefore, the application and locations in which diene rubbers can be used as a vibration proofing rubber are limited.

On the other hand, an ethylene-$\alpha$-olefin copolymer rubber has excellent heat resistance and weather resistance. For this reason, the ethylene-$\alpha$-olefin copolymer rubber is widely used in various applications such as autoparts, a wire covering material, an electric insulation material, rubber goods for general industry, and civil engineering and construction material. The ethylene-$\alpha$-olefin copolymer rubber is also used as a modifier of various plastics such as polypropylene and polystyrene. However, the ethylene-$\alpha$-olefin copolymer rubber does not necessarily have good mechanical characteristics and vibration proofing properties and is not necessarily a good material for vibration proofing rubber.

As related prior art, a rubber composition containing a polymer made by crosslinking an ethylene-$\alpha$-olefin copolymer rubber with a functional group-containing (co)polymer using a metal component (for example, Patent Document 1), a rubber composition containing an ethylene-$\alpha$-olefin copolymer rubber, a functional group-containing (co)polymer, and a silica-based filler (for example, Patent Document 2), and the like have been disclosed. However, molded rubber articles made from these rubber compositions still have to be improved as to vibration proofing properties and heat resistance. In addition, since these rubber compositions do not always have good processability, further improvement is necessary.

(Patent Document 1) JP-A-2004-67831
(Patent Document 2) JP-A-2004-83622

US 2005171276 (A1) relates to a first-order modified, hydrogenated polymer comprising (1) a hydrogenated polymer obtained by hydrogenating at least one unhydrogenated polymer selected from the group consisting of a polymer comprising conjugated diene monomer units and a copolymer comprising conjugated diene monomer units and vinyl aromatic hydrocarbon monomer units, and (2) a functional group-containing first-order modifier group bonded to the hydrogenated polymer (1), wherein the content of the vinyl aromatic hydrocarbon monomer units, vinyl aromatic hydrocarbon block ratio, weight average molecular weight, and hydrogenation ratio (as measured with respect to the double bonds in the conjugated diene monomer units) of the first-order modified, hydrogenated polymer are, respectively, within specific ranges.; and a second-order modified polymer obtained by reacting a second-order modifier with a first-order modified polymer comprising ($\beta$) a base polymer and ($\gamma$) a functional group-containing first-order modifier group bonded to the base polymer ($\beta$). A composition comprising the above-mentioned first-order modified, hydrogenated polymer or second-order modified polymer and at least one functional component other than the modified polymer.

EP1306393 (A1) relates to a hydrogenated polymer which is a hydrogenation product of a conjugated diene polymer having an average vinyl bond content of 20% by weight or more and less than 50% by weight and a weight average molecular weight of 60,000 to 600,000 to a degree such that 85% or more of the residual double bonds in the conjugated diene units are hydrogenated, and which has a molecular weight and a number of terminal methyl group carbons as measured by GPC/FTIR analysis satisfying a specific relationship.

DISCLOSURE OF THE INVENTION

The present invention has been completed in view of the problems in the related art and has an object of

providing a hydrogenated diene polymer composition which has excellent processability and can produce a molded rubber article having excellent vibration proofing properties and heat resistance, and providing a molded rubber article having excellent vibration proofing properties and heat resistance.

The inventors of the present invention have conducted extensive studies in order to achieve the above objects. As a result, the inventors have found that the above objects can be achieved by mixing a polymer obtained by hydrogenating a diene polymer containing a specific amount of vinyl bonds and having a weight average molecular weight (Mw), a molecular weight distribution (Mw/Mn), and a hydrogenation degree in specific ranges with a filler. Thus, the present invention has been completed.

That is, according to the present invention, the following hydrogenated diene polymer composition and molded rubber article are provided.

[1] A hydrogenated diene polymer composition comprising (A) a first hydrogenated diene polymer having a weight average molecular weight (Mw) of 100,000 to 1,700,000, a molecular weight distribution (Mw/Mn) of 1.0 to 3.0, and a hydrogenation degree of 72 to 96%, the first hydrogenated diene polymer (A) being obtained by hydrogenating a first diene polymer which has a vinyl bond content of 20 to 70% and being a modified polymer having an amino group and an alkoxysilyl group, and (B) a first filler, wherein the hydrogenated diene polymer composition contains the first filler (B) in an amount of 5 to 100 parts by mass per 100 parts by mass of the first hydrogenated diene polymer (A) (hereinafter referred to from time to time as "a first hydrogenated diene polymer composition").

[2] The hydrogenated diene polymer composition according to [1], wherein the first diene polymer is a butadiene rubber, a styrene-butadiene rubber, a styrene-butadiene-isoprene random copolymer, or a butadiene-isoprene random copolymer.

[3] The hydrogenated diene polymer composition according to [1] or [2], wherein the number of the functional group included in one molecular chain of the first hydrogenated diene polymer (A) is 0.1 to 5.0.

[4] The hydrogenated diene polymer composition according to any one of [1] to [3], wherein the first filler (B) is silica and/or carbon.

[5] A molded rubber article made of a crosslinked rubber produced by crosslinking the hydrogenated diene polymer composition defined in any one of [1] to [4].

The hydrogenated diene polymer compositions of the present invention can produce a molded rubber article with excellent vibration proofing properties and heat resistance, and has excellent processability.

The molded rubber article of the present invention has an effect of possessing excellent vibration proofing properties and heat resistance.

BEST MODE FOR CARRYING OUT THE INVENTION

The preferred embodiments for carrying out the present invention are described below. However, the present invention is not restricted to the following embodiments and it should be construed that there are also included, in the present invention, those embodiments in which appropriate changes, improvements, etc. have been made to the following embodiments based on the ordinary knowledge possessed by those skilled in the art, as long as there is no deviation from the gist of the present invention.

1. hydrogenated diene polymer composition

The hydrogenated diene polymer composition according to the present invention comprises (A) a first hydrogenated diene polymer (hereinafter referred to from time to time as "component (A)" obtained by hydrogenating a diene polymer which has a vinyl bond content of 20 to 70% and being a modified polymer having an amino group and an alkoxysilyl group, having a weight average molecular weight (Mw) of 100,000 to 1,700,000, a molecular weight distribution (Mw/Mn) of 1.0 to 3.0, and a degree of hydrogenation of 72 to 96% and (B) a first filler (hereinafter referred to from time to time as "component (B)), wherein the amount of the component (B) is 5 to 100 parts by mass per 100 parts by mass of the component (A). The details are described below.

((A) Hydrogenated diene polymer)

The component (A) contained in the first hydrogenated diene polymer composition of the present invention is the first hydrogenated diene polymer. The component (A) can be obtained by hydrogenating a specific diene polymer (first diene polymer).

(First diene polymer)

The first diene polymer (hereinafter referred to from time to time as "first unhydrogenated polymer) used for producing the component (A) is not specifically limited as to the type and structure. The polymer may be either a homopolymer or a copolymer. As specific examples of the first diene polymer, rubbers such as a butadiene rubber (BR), a styrene-butadiene rubber (SBR), a styrene-butadiene-isoprene random copolymer, and a butadiene-isoprene random copolymer can be given. Of these rubbers, the butadiene rubber and the butadiene-isoprene random copolymer are preferable.

The vinyl bond content of the first unhydrogenated polymer is 20 to 70%, preferably 30 to 60%, and particularly preferably 35 to 45%. If the vinyl bond content of the diene polymer is below 20%, the heat of fusion increases and the properties at low temperature are unduly impaired. If exceeding 70%, the vibration proofing properties decrease.

The degree of hydrogenation of the component (A) is preferably 72 to 96%, more preferably 74 to 95%, and still more preferably 80 to 93%. If the degree of hydrogenation of the component (A) is below 72%, heat aging performance tends to be poor. If the degree of hydrogenation of the component (A) exceeds 96%, crosslink density is low and vibration proofing properties decrease.

There are no particular limitations to the method of adding hydrogen and the reaction conditions. Usually, the reaction is carried out at a temperature of 20 to 150°C under hydrogen pressure of 0.1 to 10 MPa in the presence of a hydrogenation catalyst. The hydrogenation rate may be optionally selected by changing the amount of the hydrogenation catalyst, the hydrogen pressure during the hydrogenated reaction, the reaction time, and the like. As the hydrogenation catalyst, a compound containing a Ib, IVb, Vb, VIb, VIIb, or VIII group metal may be usually used. For example, a compound containing Ti, V, Co, Ni, Zr, Ru, Rh, Pd, Hf, Re, or Pt may be used as the hydrogenation catalyst. As specific examples of such a hydrogenation catalyst, a metallocene compound containing Ti, Zr, Hf, Co, Ni, Pd, Pt, Ru, Rh, Re, or the like; a carrier-type heterogeneous catalyst prepared by causing a metal such as Pd, Ni, Pt, Rh, or Ru to be carried on a carrier such as carbon, silica, alumina, or diatomaceous earth; a homogeneous Ziegler-type catalyst prepared by combining an organic salt or an acetylacetone salt of a metal element such as Ni or Co with a reducing agent such as organoaluminum; an organometallic compound or complex of Ru, Rh, or the like; fullerene, carbon nanotube, and the like storing hydrogen; and the like can be given.

Of these, the metallocene compound containing Ti, Zr, Hf, Co, or Ni is preferable since the hydrogenated reaction can be carried out in an inert organic solvent in a homogeneous system. The metallocene compound containing Ti, Zr, or Hf is more preferable. In particular, a hydrogenation catalyst obtained by reacting a titanocene compound with an alkyllithium is preferable due to low cost and industrial advantage. As specific examples, hydrogenation catalysts described in JP-A-1-275605, JP-A-5-271326, JP-A-5-271325, JP-A-5-222115, JP-A-11-292924, JP-A-2000-37632, JP-A-59-133203, JP-A-63-5401, JP-A-62-218403, JP-A-7-90017, JP-B-43-19960, or JP-B-47-40473 can be given. These hydrogenation catalysts can be used individually or in combination of two or more.

The weight average molecular weight (Mw) of the component (A) is 100,000 to 1,700,000, preferably 150,000 to 1,700,000, and more preferably 150,000 to 1,500,000. If the weight average molecular weight (Mw) is below 100,000, viscosity is too low and processability is poor. If the weight average molecular weight (Mw) exceeds 1,700,000, viscosity is too high and processability is poor. The term "weight average molecular weight (Mw)" refers to the polystyrene reduced weight average molecular weight determined by gel permeation chromatography (GPC) at 130°C.

The molecular weight distribution (Mw/Mn) of the component (A) is 1.0 to 3.0, preferably 1.0 to 2.5, and more preferably 1.0 to 2.0. If the Mw/Mn is more than 3.0, vibration proofing properties tend to be poor. The molecular weight distribution is the ratio of the weight average molecular weight (Mw) to the number average molecular weight (Mn). The term "number average molecular weight (Mn)" refers to the polystyrene reduced number average molecular weight determined by gel permeation chromatography (GPC) at 130°C.

The component (A) is a modified polymer having a functional group in the molecular chain. In the modified polymer, the component (A) contained in the hydrogenated diene polymer composition of the present invention can mutually react with a filler and increase dispersibility of the filler in the composition, whereby it is possible to lower the static-dynamic ratio, which results in improvement of the vibration proofing poperties and other properties at high temperatures.

The component (A) is a modified polymer having a functional group introduced into the molecular chain, the functional group which may be introduced is preferably a carboxyl group, an alkoxysilyl group, an epoxy group, an amino group, a hydroxyl group, a sulfone group, an oxazoline group, an isocyanate group, a thiol group, or a halogen atom (one or more of fluorine, chlorine, bromine, and iodine). Of these, the amino group, the alkoxyl group, and the oxazoline group are more preferable.

The polymer according to claim 1 has an amino group and an alkoxysilyl group. The carboxyl group includes not only a general carboxyl group (-COOH), but also groups that generate a carboxyl group by hydrolysis. Examples of a group that generates a carboxyl group by hydrolysis include an ester group, an amide group, and the like, in addition to the anhydrous carboxyl group shown by the following formula (1),

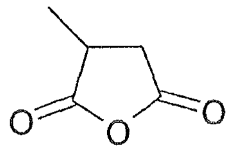
(1)

There are no specific limitations to the method of introducing a functional group into the component (A). For example, (1) a method of introducing a functional group by polymerizing using a polymerization initiator having the functional group, (2) a method of introducing a functional group by reacting an unsaturated monomer having a functional group, and (3) a method of introducing a functional group by reacting a polymerization terminator having the functional group with active sites of the (co)polymer can be given. These methods may be used either individually or in combination of two or more.

**For the component (A) being the modified** polymer having a functional group introduced into molecular chain, the number of functional groups contained in one molecular chain (hereinafter referred to from time to time as "functional group content (1)") is preferably 0.1 to 5.0, and more preferably 1.0 to 5.0. If below 0.1, the effect of introducing the functional group may not be sufficiently exhibited.

The number of functional groups contained in one molecular chain, that is, the functional group content (1), which is the number of functional groups per polymer (one molecular chain) in the present specification is a value determined by titration. For example, when the functional group is an amino group, the functional group content (1) is a value determined by the amine titrating method described in Analy. Chem. 564 (1952). Specifically, a polymer solution is prepared by dissolving a purified polymer in an organic solvent and a $HClO_4/CH_3COOH$ solution is added dropwise until the color of the polymer solution turns from purple to light blue using methyl violet as an indicator. The functional group content (1) may be calculated from the amount of the added $HClO_4/CH_3COOH$ solution.

((B) First filler)

The component (B) contained in the **hydrogenated** diene polymer composition of the present invention is a first filler. Strength may be improved by adding the component (B). Silica, carbon black, glass fibers, glass powders, glass beads, mica, calcium carbonate, potassium-titanate whiskers, talc, clay, barium sulfate, glass flakes, fluororesins, and the like are preferable as the filler. Among these, silica, carbon black, glass fibers, mica, potassium-titanate whiskers, talc, clay, barium sulfate, glass flakes, and fluororesins are preferable. Silica and carbon black are more preferable. It is preferable for the composition to contain silica, particularly both silica and carbon black.

Silica is preferable from the viewpoint of the static-dynamic ratio. Carbon black is preferable from the viewpoint of strength. Any kind of silica such as wet white carbon, dry white carbon, and colloidal silica may be used. Among these, wet white carbon having a water-containing silicic acid as a main component is preferable. Any kind of carbon black such as furnace black, acetylene black, thermal black, channel black, and graphite may be used. Among these, furnace black is preferable. Specifically, SRF, GPF, FEF, HAF, ISAF, SAF, and MT are more preferable.

Although there are no particular limitations, the specific surface area measured by nitrogen adsorption of carbon black by the use of the BET method in accordance with ASTM D3037-81 is preferably 5 to 200 $m^2/g$, more preferably 50 to 150 $m^2/g$, and particularly preferably 80 to 130 $m^2/g$, in order to sufficiently improve the tensile strength of the crosslinked rubber. Although there are no particular limitations, DBP adsorption of carbon black is preferably 5 to 300 ml/100 g, more preferably 50 to 200 ml/100 g, and particularly preferably 80 to 160 ml/100 g, in order to sufficiently improve the strength of the crosslinked rubber.

(hydrogenated diene polymer composition)

The hydrogenated diene polymer composition of the present invention contains the component (B) in an amount of 5 to 100 parts by mass, preferably 5 to 70 parts by mass, and more preferably 5 to 40 parts by mass to 100 parts by mass of the component (A). If the amount of the component (B) is below 5 parts by mass for 100 parts by mass of the component (A), the strength is not sufficient. If the amount exceeds 100 parts by mass, vibration proofing performance is poor.

(Other components)

The hydrogenated diene polymer composition of the present invention may comprise rubber components other than the component (A), to an extent not inhibiting the objects of the present invention. As examples of the rubber components, styrene-butadiene rubber, butadiene rubber, isoprene rubber, natural rubber, EPDM, NBR, IIR and the like can be given. However, if natural rubber is contained in a large amount, heat resistance of the hydrogenated diene

polymer composition may decrease. Therefore, when natural rubber is used, it is preferable to add 15 parts by mass or less for 100 parts by mass of the component (A) in order to produce the hydrogenated diene polymer composition.

The hydrogenated diene polymer composition of the present invention may comprise amine compounds, to an extent not inhibiting the objects of the present invention. The amine compounds improve wettability and dispersibility of the component (B) and the component (E), thereby improving durability and vibration proofing performance of the hydrogenated diene polymer composition. The amine compounds may be used individually or in combination of two or more.

There are no particular limitations to the chemical structure of the amine compounds insofar as the amine compounds have an amino group. Primary amines, secondary amines, or tertiary amines may be used. There are no particular limitations to the number of the amino groups. Monoamines, diamines, triamines, tetraamines, and polyamines may be used. Furthermore, there are no particular limitations to the number of carbon atoms in the amine compound. The number of the carbon atoms is usually 1 to 20, preferably 1 to 15, more preferably 3 to 15, and still more preferably 3 to 10. The amine compound may be alkanol amine or the like which contains functional groups other than the amino group. Specific examples of the amine compound are 2-ethylhexyl amine, triethanol amine, and the like.

The amount of the amine compound is not particularly limited and may be variously changed as required. The amount of the amine compound in the first hydrogenated diene polymer composition is usually 20 parts by mass or less, preferably exceeding 0 but 15 parts by mass or less, more preferably exceeding 0 but 10 parts by mass or less, still more preferably 0.01 to 10 parts by mass, particularly preferably 0.01 to 8 parts by mass, and most preferably 0.01 to 5 parts by mass for 100 parts by mass of the component (A). The amount of the amine compound in the second hydrogenated diene polymer composition is usually 20 parts by mass or less, preferably exceeding 0 but 15 parts by mass or less, more preferably exceeding 0 but 10 parts by mass or less, still more preferably 0.01 to 10 parts by mass, particularly preferably 0.01 to 8 parts by mass, and most preferably 0.01 to 5 parts by mass for 100 parts by mass of the total amount of the component (C) and the component (D).

The hydrogenated diene polymer composition of the present invention may further comprise various additives as required to an extent not inhibiting the objects of the present invention. As examples of the additives, rubber extender oil, a filler, a crosslinking agent, a crosslinking promoter, a crosslinking activating agent, and the like can be given.

As the rubber extender oil, petroleum blending stocks such as paraffinic process oil, aromatic process oil, naphthenic process oil and the like can be used. Of these, paraffinic process oil is preferable. The amount of the rubber extender oil in the hydrogenated diene polymer composition is preferably 150 parts by mass or less, and more preferably 100 parts by mass or less for 100 parts by mass of the component (A) (or the total amount of the component (A) and the other rubber components).

The rubber extender oil may be previously added to the rubber components.

As specific examples of the crosslinking agent, an organoperoxide such as dicumyl peroxide and di-t-butyl peroxide; sulfur such as powder sulfur, precipitated sulfur, colloidal sulfur, insoluble sulfur, and highly dispersibile sulfur; a halogenated sulfur compound such as sulfur monochloride and sulfur dichloride; a quinone dioxime such as p-quinone dioxime and p,p'-dibenzoyl quinine dioxime; an organo-polyamine compound such as triethylene tetramine, hexamethylene diamine carbamate, and 4,4'-methylenebis-o-chloroaniline; an alkyl phenol resin having a methylol group; and the like can be given. These crosslinking agents may be used individually or in combination of two or more. Two or more types of the crosslinking agents may be used in combination. The amount of the crosslinking agent in **the hydrogenated** diene polymer composition is preferably 0.1 to 20 parts by mass, and more preferably 0.5 to 10 parts by mass for 100 parts by mass of the component (A) (or the total amount of the component (A) and the other rubber components).

Tensile strength of the crosslinked rubber is sufficiently improved by adding the crosslinking agent in an amount within the above range.

Various types of the crosslinking promoter listed in (a) to (g) may be used.

(a) Sulfenamide crosslinking promoters such as N-cyclohexyl-2-benzothiazole sulfeneamide, N-t-butyl-2-benzothiazole sulfeneamide, N-oxyethylene-2-benzothiazole sulfeneamide, N-oxyethylene-2-benzothiazole sulfeneamide, N,N'-diisopropyl-2-benzothiazole sulfeneamide, and the like

(b) Guanidine crosslinking promoters such as diphenyl guanidine, diorthotolyl guanidine, orthotolyl biguanidine, and the like

(c) Thiourea crosslinking promoters such as thiocarboanilido, diorthotolyl thiourea, ethylene thiourea, diethyl thiourea, trimethyl thiourea, and the like

(d) Thiazol crosslinking promoters such as 2-mercaptobenzothiazol, dibenzothiazil disulfide, zinc 2-mercaptobenzothiazol, sodium 2-mercaptobenzothiazol, cyclohexylamine 2-mercaptobenzothiazol, 2-(2,4-dinitrophenylthio)benzothiazol, and the like

(e) Thiuram crosslinking promoters such as tetramethyl thiuram monosulfide, tetramethyl thiuram disulfide, tetraethyl thiuram disulfide, tetrabutyl thiuram disulfide, dipentamethylene thiuram tetrasulfide, and the like

(f) Dithiocarbamic acid crosslinking promoters such as sodium dimethyldithiocarbamate, sodium diethyldithiocarbamate, sodium di-n-butyldithiocarbamate, lead dimethyldithiocarbamate, zinc dimethyldithiocarbamate, zinc diethyldithiocarbamate, zinc di-n-butyldithiocarbamate, zinc pentamethylenedithiocarbamate, zinc ethylphenyldithiocarbamate, tellurium diethyldithiocarbamate, selenium dimethyldithiocarbamate, selenium diethyldithiocarbamate, copper dimethyldithiocarbamate, iron dimethyldithiocarbamate, diethylamine diethyldithiocarbamate, piperidine pentamethylenedithiocarbamate, pipecolin methylpentamethylenedithiocarbamate, and the like

(g) Xanthic acid crosslinking promoters such as sodium isopropylxanthogenate, zinc isopropylxanthogenate, zinc butylxanthogenate, and the like

The same types of the above-mentioned crosslinking promoters may be used individually or in combination of two or more, or two or more different types of the crosslinking promoters may be used in combination. The amount of the crosslinking promoters in the hydrogenated diene polymer composition is preferably 20 parts by mass or less, and more preferably 10 parts by mass or less for 100 parts by mass of the component (A) (or the total amount of the component (A) and the other rubber components).

It is possible to use an organoperoxide as the crosslinking agent, and add a small amount of sulfur to the organoperoxide (preferably 1 to 5 parts by mass, and more preferably 2 to 4 parts by mass for 100 parts by mass of the organoperoxide) as a crosslinking assistant.

As the crosslinking activator, a higher fatty acid such as stearic acid and zinc oxide may be used. Zinc oxide preferably has a high surface activity and a diameter of 5 μm or less. Examples of the zinc oxide include active zinc oxide having a diameter of 0.05 to 0.2 μm, zinc oxide having a diameter of 0.3 to 1 μm, or the like. Also, an amine dispersant, a zinc oxide of which the surface is treated with lubricant, or the like can be used. The same types of these crosslinking activators may be used individually or in combination of two or more, or two or more different types of the crosslinking activators may be used in combination. The amount of the crosslinking activator may be appropriately selected according to the types and the like.

When the organoperoxide crosslinking agent is used, sulfur, quinondioxime such as p-quinondioxime, polyethylene glycol dimethacrylate, diallyl phthalate, triallyl cyanulate, divinylbenzene, and the like may be used as a crosskinking assistant. The amount of the crosslinking assistant in the hydrogenated diene polymer composition is preferably 0.1 to 20 parts by mass, and more preferably 0.1 to 10 parts by mass for 100 parts by mass of the component (A) (or the total amount of the component (A) and the other rubber components).

(Method for producing hydrogenated diene polymer composition)

The hydrogenated diene polymer composition of the present invention may be produced by mixing the component (A) and the component (B). Mixing in a solution or in a slurry, mixing using a kneader while heating, and the like are preferable as a method of mixing. As a kneader, a banbury mixer, a mixing roll, and the like can be given. The mixing conditions are not particularly limited and may be variously changed as required. The heating temperature is preferably 100 to 220°C, and more preferably 120 to 200°C. When mixing, the other components may be added as required.

3. Molded rubber article

Next, one embodiment of the molded rubber article of the present invention is described. The molded rubber article of the embodiment is made of a crosslinked rubber produced by crosslinking the above-described hydrogenated diene polymer composition. Therefore, the molded rubber article of the embodiment is excellent in vibration proofing properties and heat resistance.

To produce the molded rubber article using the hydrogenated diene polymer composition of the present invention, a compounded rubber composition is obtained first by adding the crosslinking agent (e.g. peroxides) and the crosslinking assistant (e.g. sulfur), as required, to the hydrogenated diene polymer composition. The produced compounded rubber composition is molded while crosslinking the component (A) contained in the hydrogenated diene polymer composition to produce the molded rubber article of the present invention.

The molded rubber article of the present invention is suitable as a vibration proofing rubber; a hose or a hose cover such as a diaphragm, a roll, a radiator hose, an air hose, and the like; a sealer such as a packing, a gasket, a weather strip, an o-ring, an oil seal, and the like; a belt, a lining, a dust boot, and the like. As it has been discussed, the hydrogenated diene polymer composition of the present invention has sufficient heat resistance and excellent vibration proofing properties. Accordingly, the molded rubber article of the present invention produced using those materials is suitable as a vibration proofing rubber.

EXAMPLES

The present invention is described below in detail by way of examples. Note that the present invention is not limited to the following examples. In the examples, "part(s)" means "part(s) by mass" and "%" means "mass%" unless otherwise indicated. Methods for measuring and evaluating various properties are as follows.

<Weight average molecular weight (Mw)> A polystyrene reduced weight average molecular weight was determined using gel permeation chromatography (GPC, column: "HLC-8120" manufactured by Tosoh Corp.) at 130°C.

<Number average molecular weight (Mn)> A polystyrene reduced number average molecular weight was determined using gel permeation chromatography (GPC, column: "HLC-8120" manufactured by Tosoh Corp.) at 130°C.

<Vinyl bond content (before hydrogenation)> Calculated by the Hampton method using infrared absorption spectrometry.

<Degree of Hydrogenation> Measured and calculated by $^1$H-NMR spectrometry at 270 MHz using a carbon tetrachloride solution.

<Functional group content (1)> Determined by the amine titrating method described in Analy. Chem. 564 (1952). Specifically, a polymer solution is prepared by dissolving a purified polymer in an organic solvent and a $HClO_4/CH_3COOH$ solution is added dropwise until the color of the polymer solution turns from purple into light blue using methyl violet as an indicator. The functional group content was calculated from the amount of the added $HClO_4/CH_3COOH$ solution. The functional group content is shown by the following formula (2).

$$\text{Functional group content} = \text{number of functional groups/polymer (one molecular chain)} \quad \ldots (2)$$

<Functional group content (2) (amine concentration)> Determined by the amine titrating method described in Analy. Chem. 564 (1952). Specifically, a polymer solution is prepared by dissolving a purified polymer in an organic solvent and a $HClO_4/CH_3COOH$ solution is added dropwise until the color of the polymer solution turns from purple into light blue using methyl violet as an indicator. The functional group content (amine concentration) was calculated from the amount of the added $HClO_4/CH_3COOH$ solution.

<Processability (roller windability)> Windability onto a roller was observed using a 6-inch roller at a pre/after rolling rate of 22 rpm/20 rpm at a nip of 2 mm at 50°C. The processaibility (windability onto a roller) was evaluated according to the following standard.

Good: (tightly wound without adherence)
Bad: (adhered or not tightly wound)

<Tensile stress, tensile breaking strength ($T_B$), and tensile breaking elongation ($E_B$)> Measured according to JIS K6251 using No. 3 test specimen at a measuring temperature of 23°C and a drawing rate of 500 mm/min (normal state properties).

<Hardness (Duro A)> Spring hardness (durometer A hardness) of a test specimen was measured according to JIS K6253.

<Dynamic modulus of elasticity> Dynamic modulus of elasticity at 70 Hz was measured using a block test specimen under the conditions of dynamic distortion of 1% and a temperature of 25°C according to JIS K6394. Dynamic modulus of elasticity at 0.1 Hz was also measured in the same manner under the conditions of dynamic distortion of 10% and a temperature of 25°C. A viscoelasticity meter "ARES" manufactured by Rheometric Scientific Inc. was used for the measurement.

<static-dynamic ratio> Calculated using the following formula (4).

$$\text{Static-dynamic ratio} = (\text{dynamic modulus of elasticity at 70 Hz}) / (\text{dynamic modulus of elasticity at 0.1 Hz}) \quad \ldots (4)$$

<Compression set (CS)> Measured according to JIS K6262 under the conditions of 120°C and 70 hours.

Example 1 **(Reference)**

A 50-liter reaction vessel of which the atmosphere was replaced with nitrogen was charged with 28 kg of

cyclohexane, 56 g of tetrahydrofuran, and 1400 g of 1,3-butadiene. After setting the temperature at 50°C, the mixture was polymerized under adiabatic conditions. After completion of the polymerization, hydrogen gas was supplied under the pressure of 0.4 MPa-Gauge for 20 minutes while stirring to react the polymer terminals which are active as living anions with lithium to produce lithium hydride. After heating the reaction solution to 90°C, the hydrogenated reaction was carried out using titanocene dichloride as a major component of the hydrogenation catalyst. When hydrogen absorption was completed, the reaction solution was allowed to become ambient temperature and pressure, discharged from the reaction vessel, and poured into water while stirring. The solvent was removed by steam stripping to obtain a hydrogenated diene polymer. The resulting hydrogenated diene polymer had a weight average molecular weight of 751,000, a molecular weight distribution (Mw/Mn) of 1.09, a vinyl bond content of 35.2%, and a hydrogenation rate of 91.2%.

100 parts of the hydrogenated diene polymer, 5 parts of zinc oxide, 0.5 parts of stearic acid, 30 parts of silica, 3 parts of a coupling agent, 5 parts of SRF carbon, and 40 parts of a softener were kneaded in a 250 ml plastmill at 150°C for five minutes to obtain a mixture. After the addition of 5 parts of a crosslinking agent and 0.2 parts of a crosslinking adjuvant, the mixture was kneaded at 50 to 70°C for five minutes using an open roller to obtain a compounded rubber composition. As the compounded components, the following (1) to (9) were used.

[Compounded components]

(1) Zinc oxide: "Zinc Oxide 2" manufactured by Hakusui Tech Co., Ltd.
(2) Stearic acid: "Lunac S30" manufactured by Kao Corp.
(3) Silica: "Nipseal ER" manufactured by Tosoh silica Corp.
(4) Coupling agent: "TSL8370" manufactured by GE Toshiba Silicones Co., Ltd.
(5) SRF carbon: "Seast S" manufactured by Tokai Carbon Co., Ltd.
(6) Softener: "Diana Process PW90" manufactured by Idemitsu Kosan Co., Ltd.
(7) Crosslinking agent: "Percumyl D-40" manufactured by NOF Corp.
(8) Crosslinking adjuvant: "Iou" manufactured by Tsurumi Kagaku Co., Ltd.

The compounded rubber composition was heated at 170°C for 20 minutes under pressure of 150 $kgf/cm^2$ using a press machine to obtain a test specimen (a vulcanized rubber sheet) with a thickness of 2 mm. As a result of evaluation, the test specimen was found to have good processability (rated as "Good"), a tensile stress of 1.1 MPa (at 100% modulus) and 3.2 MPa (300% modulus), a tensile breaking strength ($T_B$) of 15.3 MPa, a tensile breaking elongation ($E_B$) of 700%, hardness (Duro A) of 51, and a compression set (CS) of 22%.

The resulting compounded rubber composition was heated for 20 minutes to obtain a block test specimen for viscoelasticity measurement. The block test specimen obtained was found to have dynamic modulus of elasticity of 2.15 MPa (at 70 Hz) and 1.52 MPa (at 0.1Hz), and a static-dynamic ratio of 1.41.

Example 2 **(Reference)**

A hydrogenated diene polymer was obtained in the same manner as in Example 1 except that the weight average molecular weight (Mw), the molecular weight distribution (Mw/Mn), and the vinyl bond content of the polymer before hydrogenation were as shown in Table 1. Various properties of the hydrogenated diene polymer are shown in Table 1. A compounded rubber composition, a test specimen (vulcanized rubber sheet), and a block test specimen were prepared in the same manner as in Example 1, except for changing the formulation as shown in Table 1. The properties of the test specimen (vulcanized rubber sheet) and the block test specimen are shown in Table 1.

Example 3 **(Reference)**

A hydrogenated diene polymer was obtained in the same manner as in Example 1, except for changing the hydrogenation rate as shown in Table 1. Various properties of the hydrogenated diene polymer are shown in Table 1. A compounded rubber composition, a test specimen (vulcanized rubber sheet), and a block test specimen were prepared in the same manner as in Example 1, except for changing the formulation as shown in Table 1. The properties of the test specimen (vulcanized rubber sheet) and the block test specimen are shown in Table 1.

Example 4

A 50-liter reaction vessel of which the atmosphere was replaced with nitrogen was charged with 28 kg of

cyclohexane, 61.6 g of tetrahydrofuran, 0.61 g of n-butyl lithium, 0.59 g of piperidine, and 1400 g of 1,3-butadiene. After setting the temperature at 30°C, the mixture was polymerized under adiabatic conditions. After polymerization, 2.19 g of N,N-bis(trimethylsilyl)aminopropylmethyldiethoxysilane was added and reacted for 60 minutes to introduce modification groups to active sites of the resulting diene polymer. A hydrogenated diene polymer was obtained in the same manner as in Example 1. Various properties of the hydrogenated diene polymer are shown in Table 1. A compounded rubber composition, a test specimen (vulcanized rubber sheet), and a block test specimen were prepared in the same manner as in Example 1, except for changing the formulation as shown in Table 1. The properties of the test specimen (vulcanized rubber sheet) and the block test specimen are shown in Table 1.

Example 5

A hydrogenated diene polymer was obtained in the same manner as in Example 4 except that the weight average molecular weight (Mw) and the molecular weight distribution (Mw/Mn) were as shown in Table 1. Various properties of the hydrogenated diene polymer are shown in Table 1. A compounded rubber composition, a test specimen (vulcanized rubber sheet), and a block test specimen were prepared in the same manner as in Example 1, except for changing the formulation as shown in Table 1. The properties of the test specimen (vulcanized rubber sheet) and the block test specimen are shown in Table 1.

Example 6 **(Reference)**

A 50-liter reaction vessel of which the atmosphere was replaced with nitrogen was charged with 28 kg of cyclohexane, 41.3 g of tetrahydrofuran, 0.96 g of n-butyl lithium, and 2500 g of 1,3-butadiene. After setting the temperature at 40°C, the mixture was polymerized under adiabatic conditions. After polymerization, 0.58 g of silicon tetrachloride was added and reacted for 20 minutes to effect coupling modification with active sites of the resulting diene polymer. Next, hydrogen gas was supplied at a pressure of 0.4 MPa-G to react with unreacted polymer-terminal lithium for 20 minutes with stirring to produce lithium hydride. A part of the polymer solution (10 kg) was removed and 11.0 kg of fresh cyclohexane was added to adjust the viscosity. The hydrogenation reaction was carried out by supplying hydrogen gas under pressure of 0.7 MPa-G at 90°C in the presence of a catalyst containing titanocene dichloride as a major component. When hydrogen absorption was completed, the reaction solution was allowed to become ambient temperature and pressure, discharged from the reaction vessel, and poured into water while stirring. The solvent was removed by steam stripping to obtain a hydrogenated diene polymer. Various properties of the hydrogenated diene polymer are shown in Table 1. A compounded rubber composition, a test specimen (vulcanized rubber sheet), and a block test specimen were prepared in the same manner as in Example 1, except for changing the formulation as shown in Table 1. The properties of the test specimen (vulcanized rubber sheet) and the block test specimen are shown in Table 1.

Example 7

A 50-liter reaction vessel of which the atmosphere was replaced with nitrogen was charged with 28 kg of cyclohexane, 61.6 g of tetrahydrofuran, 0.61 g of n-butyl lithium, 0.59 g of piperidine, and 1400 g of 1,3-butadiene. After setting the temperature at 50°C, the mixture was polymerized under adiabatic conditions. After polymerization, 2.60 g of 4-{2-[N,N-bis(trimethylsilyl)amino]ethyl}styrene was added and reacted for 60 minutes to introduce to the active sites of the resulting diene polymer. Next, hydrogen gas was supplied at a pressure of 0.4 MPa-G to react with unreacted polymer-terminal lithium for 20 minutes with stirring to produce lithium hydride. A hydrogenated reaction was carried out under hydrogen gas supply pressure of 0.7 MPa-G at a reaction solution temperature of 90°C using a catalyst containing titanocene dichloride as a major component. When hydrogen absorption was completed, the reaction solution was allowed to become ambient temperature and pressure, discharged from the reaction vessel, and poured into water while stirring. The solvent was removed by steam stripping to obtain a hydrogenated diene polymer. Various properties of the hydrogenated diene polymer are shown in Table 1. A compounded rubber composition, a test specimen (vulcanized rubber sheet), and a block test specimen were prepared in the same manner as in Example 1, except for changing the formulation as shown in Table 1. The properties of the test specimen (vulcanized rubber sheet) and the block test specimen are shown in Table 1.

Example 8

A 50-liter reaction vessel of which the atmosphere was replaced with nitrogen was charged with 28 kg of cyclohexane, 61.6 g of tetrahydrofuran, 0.61 g of n-butyl lithium, 0.59 g of piperidine, and 1400 g of 1,3-butadiene. After setting the temperature at 50°C, the mixture was polymerized under adiabatic conditions. After polymerization, 1.13 g of N,N-bis(trimethylsilyl)aminopropyltrimethoxysilane was added and reacted for 60 minutes to introduce to active sites

of the resulting diene polymer. Next, hydrogen gas was supplied at a pressure of 0.4 MPa-G to react with the polymer-terminal lithium remained as a living anion for 20 minutes with stirring to produce lithium hydride. A hydrogenated reaction was carried out under hydrogen gas supply pressure of 0.7 MPa-G at a reaction solution temperature of 90°C using a catalyst containing titanocene dichloride as a major component. When hydrogen absorption was completed, the reaction solution was allowed to become ambient temperature and pressure, discharged from the reaction vessel, and poured into water while stirring. The solvent was removed by steam stripping to obtain a hydrogenated diene polymer. Various properties of the hydrogenated diene polymer are shown in Table 1. A compounded rubber composition, a test specimen (vulcanized rubber sheet), and a block test specimen were prepared in the same manner as in Example 1, except changing the formulation as shown in Table 1. The properties of the test specimen (vulcanized rubber sheet) and the block test specimen are shown in Table 1.

Example 9

A 50-liter reaction vessel of which the atmosphere was replaced with nitrogen was charged with 28 kg of cyclohexane, 61.6 g of tetrahydrofuran, 0.61 g of n-butyl lithium, 0.59 g of piperidine, and 1400 g of 1,3-butadiene. After setting the temperature at 50°C, the mixture was polymerized under adiabatic conditions. After polymerization, 1.25 g of N-methyl-N-trimethylsilylaminoethylmethyldimethoxysilane was added and introduced to active sites of the resulting diene polymer by reacting the mixture for 60 minutes. Next, hydrogen gas was supplied at a pressure of 0.4 MPa-G to react with the polymer-terminal lithium remaining as a living anion for 20 minutes with stirring to produce lithium hydride. A hydrogenated reaction was carried out under hydrogen gas supply pressure of 0.7 MPa-G at a reaction solution temperature of 90°C using a catalyst containing titanocene dichloride as a major component. When hydrogen absorption was completed, the reaction solution was allowed to become ambient temperature and pressure, discharged from the reaction vessel, and poured into water while stirring. The solvent was removed by steam stripping to obtain a hydrogenated diene polymer. Various properties of the hydrogenated diene polymer are shown in Table 1. A compounded rubber composition, a test specimen (vulcanized rubber sheet), and a block test specimen were prepared in the same manner as in Example 1, except for changing the formulation as shown in Table 1. The properties of the test specimen (vulcanized rubber sheet) and the block test specimen are shown in Table 1.

Example 10

A 50-liter reaction vessel of which the atmosphere was replaced with nitrogen was charged with 28 kg of cyclohexane, 61.6 g of tetrahydrofuran, 0.61 g of n-butyl lithium, 0.59 g of piperidine, and 1400 g of 1,3-butadiene. After setting the temperature at 50°C, the mixture was polymerized under adiabatic conditions. After polymerization, 1.02 g of N,N-dimethylaminopropyltrimethoxysilane was added and introduced to active sites of the resulting diene polymer by reacting the mixture for 60 minutes. Next, hydrogen gas was supplied at a pressure of 0.4 MPa-G to react with the polymer-terminal lithium remaining as a living anion for 20 minutes with stirring to produce lithium hydride. A hydrogenated reaction was carried out under hydrogen gas supply pressure of 0.7 MPa-G at a reaction solution temperature of 90°C using a catalyst containing titanocene dichloride as a major component. When hydrogen absorption was completed, the reaction solution was allowed to become ambient temperature and pressure, discharged from the reaction vessel, and poured into water while stirring. The solvent was removed by steam stripping to obtain a hydrogenated diene polymer. Various properties of the hydrogenated diene polymer are shown in Table 1. A compounded rubber composition, a test specimen (vulcanized rubber sheet), and a block test specimen were prepared in the same manner as in Example 1, except for changing the formulation as shown in Table 1. The properties of the test specimen (vulcanized rubber sheet) and the block test specimen are shown in Table 1.

Comparative Example 1

Ethylene propylene rubber "EP 57C" manufactured by JSR was used as a polymer. Various properties of the ethylene propylene rubber are shown in Table 1. A compounded rubber composition, a test specimen (vulcanized rubber sheet), and a block test specimen were prepared in the same manner as in Example 1, except for changing the formulation as shown in Table 1. The properties of the test specimen (vulcanized rubber sheet) and the block test specimen are shown in Table 2.

Comparative Example 2

A hydrogenated diene polymer was obtained in the same manner as in Example 4, except that the weight average molecular weight (Mw) and the molecular weight distribution (Mw/Mn) were as shown in Table 2. Various properties of the hydrogenated diene polymer are shown in Table 2. A compounded rubber composition, a test specimen

(vulcanized rubber sheet), and a block test specimen were prepared in the same manner as in Example 2, except for changing the formulation as shown in Table 2. The properties of the test specimen (vulcanized rubber sheet) and the block test specimen are shown in Table 2.

Comparative Example 3

A 50-liter reaction vessel of which the atmosphere was replaced with nitrogen was charged with 28 kg of cyclohexane, 616 g of tetrahydrofuran, 3080 g of butadiene, 13.1 g of a catalyst synthesized from 13.1 g of 1,3-bis(1-phenylethenyl)benzene and sec-butyl lithium, and 3080 g of butadiene. After setting the temperature at 20°C, the mixture was polymerized under adiabatic conditions. After the completion of the reaction, 350 g of styrene was added and the mixture was further polymerized under adiabatic conditions. After 20 minutes, 70 g of butadiene was added and the mixture was further polymerized. After the polymerization is completed, 18.7 g of N,N-bis(trimethylsilyl)aminopropyldimethylethoxysilane was added and introduced to the active sites of the resulting diene polymer by reacting for 60 minutes. Next, hydrogen gas was supplied at a pressure of 0.4 MPa-G to react the polymer-terminal existing as a living anion with lithium for 20 minutes with stirring to produce lithium hydride. A hydrogenated reaction was carried out under hydrogen gas supply pressure of 0.7 MPa-G at a reaction solution temperature of 90°C using a catalyst containing titanocene dichloride as a major component. When hydrogen absorption was completed, the reaction solution was allowed to reach the ambient temperature and pressure and discharged from the reaction vessel. The discharged reaction solution was poured into water while stirring and the solvent was removed by steam stripping to obtain a hydrogenated diene polymer. Various properties of the hydrogenated diene polymer are shown in Table 2. A compounded rubber composition, a test specimen (vulcanized rubber sheet), and a block test specimen were prepared in the same manner as in Example 1, except for changing the formulation as shown in Table 2. The properties of the test specimen (vulcanized rubber sheet) and the block test specimen are shown in Table 2.

Comparative Example 4

A hydrogenated diene polymer was obtained in the same manner as in Example 2, except for changing the vinyl bond content of the unhydrogenated polymer as shown in Table 2. Various properties of the hydrogenated diene polymer are shown in Table 2. A compounded rubber composition, a test specimen (vulcanized rubber sheet), and a block test specimen were prepared in the same manner as in Example 1, except for changing the formulation as shown in Table 2. The properties of the test specimen (vulcanized rubber sheet) and the block test specimen are shown in Table 2.

TABLE 1

| | | Example 1 * | Example 2 * | Example 3 * | Example 4 | Example 5 | Example 6 * | Example 7 | Example 8 | Example 9 | Example 10 |
|---|---|---|---|---|---|---|---|---|---|---|---|
| Polymer (of | Polymer skeleton | Hydrogenated BR | Hydrogenated BR | Hydrogenated BR | Hydrogenated BR | Hydrogenated BR | Hydrogenated BR | Hydrogenated BR | Hydrogenated BR | Hydrogenated BR | Hydrogenated BR |
| | Modified/unmodified | Unmodified | Unmodified | Unmodified | Modified | Modified | Unmodified | Modified | Modified | Modified | Modified |
| | Mw($\times 10^4$) | 75.2 | 35.2 | 35.2 | 62.0 | 35.0 | 139.0 | 38.2 | 47.5 | 49.7 | 43.6 |
| | Mw/Mn | 1.09 | 1.06 | 1.06 | 1.09 | 1.14 | 2.80 | 1.09 | 1.13 | 1.10 | 1.15 |
| | Vinyl bond content (%) unhydrogenated polymer) | 35.2 | 38.7 | 38.7 | 38.4 | 34.4 | 38.8 | 36.5 | 35.2 | 39.5 | 36.6 |
| | Hydrogenation degree (%) | 91.2 | 92.1 | 83.7 | 92.5 | 91.1 | 90.2 | 92.6 | 91.1 | 91.3 | 94.9 |
| | Functional group content (1) (number of functional groups /polymer (one molecular chain)) | - | - | - | 0.8 | 1.3 | - | 1.3 | 1.0 | 1.5 | 0.9 |
| Formulation (part) | Polymer | 100 | 100 | 100 | 100 | 100 | 100 | 100 | 100 | 100 | 100 |
| | Zinc oxide | 5 | 5 | 5 | 5 | 5 | 5 | 5 | 5 | 5 | 5 |
| | Stearic acid | 0.5 | 0.5 | 0.5 | 0.5 | 0.5 | 0.5 | 0.5 | 0.5 | 0.5 | 0.5 |
| | Silica | 30 | 30 | 30 | 30 | 30 | 30 | 30 | 30 | 30 | 30 |
| | Coupling agent | 3 | 3 | 3 | 3 | 3 | 3 | 3 | 3 | 3 | 3 |
| | SRF carbon | 5 | 5 | 5 | 5 | 5 | 5 | 5 | 5 | 5 | 5 |
| | Softener | 40 | 40 | 40 | 40 | 40 | 40 | 40 | 40 | 40 | 40 |
| | Crosslinking agent | 5 | 5 | 5 | 5 | 5 | 5 | 5 | 5 | 5 | 5 |
| | Crosslinking adjuvant | 0.2 | 0.2 | 0.2 | 0.2 | 0.2 | 0.2 | 0.2 | 0.2 | 0.2 | 0.2 |

(continued)

| | | Example 1 * | Example 2 * | Example 3 * | Example 4 | Example 5 | Example 6 * | Example 7 | Example 8 | Example 9 | Example 10 |
|---|---|---|---|---|---|---|---|---|---|---|---|
| Processability | | Good | Good | Good | Good | Good | Bad | Good | Good | Good | Good |
| Tensile stress (MPa) | 100% Modulous | 1.1 | 1.8 | 1.7 | 1.3 | 2.2 | 1.3 | 1.6 | 1.5 | 1.6 | 1.4 |
| | 300% Modulous | 3.2 | 5.1 | 8.1 | 4.3 | 6.7 | 6.1 | 5.3 | 5.6 | 6.2 | 5.8 |
| Tensile breaking strength ($T_B$) (MPa) | | 15.3 | 18.3 | 8.6 | 13.8 | 17.6 | 16.9 | 15.8 | 16.5 | 16.7 | 15.6 |
| Tensile breaking elongation ($E_B$)(%) | | 700 | 650 | 300 | 530 | 490 | 500 | 490 | 510 | 500 | 500 |
| Hardness (Duro A) | | 51 | 62 | 54 | 53 | 66 | 54 | 58 | 55 | 52 | 58 |
| Dynamic modulus of elasticity (MPa) | 70 Hz (dynamic distortion 1%) | 2.15 | 2.23 | 1.52 | 1.51 | 2.92 | 1.44 | 1.51 | 1.65 | 1.45 | 1.87 |
| | 0.1 Hz (dynamic distortion 10% | 1.52 | 1.61 | 1.12 | 1.13 | 2.32 | 1.08 | 1.17 | 1.25 | 1.15 | 1.41 |
| Static-dynamic ratio | | 1.41 | 1.39 | 1.36 | 1.34 | 1.25 | 1.33 | 1.29 | 1.32 | 1.26 | 1.33 |
| Compression set(CS) (%) 120°C × 70h | | 22 | 24 | 16 | 26 | 17 | 16 | 24 | 20 | 26 | 27 |

* Reference

TABLE 2

| | | Comparative Examples | | | |
|---|---|---|---|---|---|
| | | 1 | 2 | 3 | 4 |
| Polymer | Polymer skeleton | EPDM | Hydrogenated BR | Hydrogenated SEBS | Hydrogenated BR |
| | Modified/unmodified | Unmodified | Modified | Modified | Unmodified |
| | Mw ($\times 10^4$) | 70.2 | 8.7 | 25.0 | 26.5 |
| | Mw/Mn | 2.10 | 1.10 | 1.11 | 1.21 |
| | Vinyl bond content (%) (of unhydrogenated polymer) | - | 39.4 | 35.6 | 60.9 |
| | Hydrogenation degree (%) | - | 92.8 | 91.5 | 90.4 |
| | Functional group content (1) (number of functional groups /polymer (one molecular chain)) | - | 0.6 | - | - |
| Formulation (part) | Polymer | 100 | 100 | 100 | 100 |
| | Zinc oxide | 5 | 5 | 5 | 5 |
| | Stearic acid | 0.5 | 0.5 | 0.5 | 0.5 |
| | Silica | 30 | 30 | 30 | 30 |
| | Coupling agent | 3 | 3 | 3 | 3 |
| | SRF carbon | 5 | 5 | 5 | 5 |
| | Softener | 40 | 40 | 40 | 40 |
| | Crosslinking agent | 5 | 5 | 5 | 5 |
| | Crosslinking adjuvant | 0.2 | 0.2 | 0.2 | 0.2 |
| Processability | | Good | Bad | Good | Good |
| Tensile stress (MPa) | 100% Modulous | 1.2 | 1.21 | 1.8 | 0.7 |
| | 300% Modulous | 4.9 | 4.2 | 6.6 | 1.5 |
| Tensile breaking strength ($T_B$) (MPa) | | 14.5 | 11.3 | 15.6 | 6.7 |
| Tensile breaking elongation ($E_B$) (%) | | 500 | 510 | 500 | 970 |
| Hardness (Duro A) | | 54 | 50 | 60 | 45 |
| Dynamic modulus of elasticity (MPa) | 70 Hz (dynamic distortion 1%) | 1.68 | 1.59 | 2.03 | 1.63 |
| | 0.1 Hz (dynamic distortion 10%) | 1.14 | 0.95 | 1.54 | 0.68 |
| Static-dynamic ratio | | 1.47 | 1.67 | 1.32 | 2.38 |
| Compression set (CS) (%) 120°C $\times$ 70h | | 11 | 75 | 57 | 46 |

(Discussion)

From the results shown in Table 1 and Table 2, it is clear that the hydrogenated diene polymers used in Examples 1 to 5 and 7 to 10 have excellent processability as compared with the hydrogenated diene polymer used in Comparative Example 2. Also, the test specimens (molded rubber articles) of Examples 1 to 10 are excellent in vibration proofing performance and heat resistance as compared with the test specimens (molded rubber articles) of Comparative Examples 1 to 4.

(Production of hydrogenated diene polymer (hydrogenated BR-1))

A 50-liter reaction vessel of which the atmosphere was replaced with nitrogen was charged with 28 kg of cyclohexane, 41.3 g of tetrahydrofuran, 0.96 g of n-butyl lithium, and 2500 g of 1,3-butadiene. The mixture was polymerized under adiabatic conditions starting from a temperature of 40°C. After the completion of the polymerization, 0.58 g of silicon tetrachloride was added to the system and the mixture was reacted for 20 minutes to carry out coupling. Next, hydrogen gas was supplied at a pressure of 0.4 MPa-G and reacted for 20 minutes with stirring to produce a polymer of which the terminal is lithium hydride. A part of the polymer solution (10 kg) was removed and 11 kg of cyclohexane was added to adjust the viscosity. A reaction was carried out under hydrogen gas supply pressure of 0.7 MPa-G at a reaction solution temperature of 90°C in the presence of a catalyst containing titanocene dichloride as a major component. Then, 932 liters of hydrogen gas was added. When hydrogen absorption was completed, the reaction solution was allowed to reach the ambient temperature and pressure and discharged from the reaction vessel. The discharged reaction solution was poured into water while stirring and the solvent was removed by steam stripping to obtain a hydrogenated diene polymer (hydrogenated BR-1). The weight average molecular weight (Mw) of the obtained hydrogenated diene polymer was 1,390,000, the molecular weight distribution (Mw/Mn) was 2.8, the vinyl bond content was 38.8%, and the hydrogenation degree was 95.2%.

(Production of hydrogenated diene polymer (hydrogenated BR-2))

A 50-liter reaction vessel of which the atmosphere was replaced with nitrogen was charged with 28 kg of cyclohexane, 61.6 g of tetrahydrofuran, 0.61 g of n-butyl lithium, 0.59 g of piperidine, and 2500 g of 1,3-butadiene. The mixture was polymerized under adiabatic conditions starting from a temperature of 50°C. After the completion of the polymerization, 2.19 g of N,N-bis(trimethylsilyl)aminopropylmethyldiethoxysilane was added to the system and the mixture was reacted for 60 minutes. Next, hydrogen gas was supplied at a pressure of 0.4 MPa-G and reacted for 20 minutes with stirring to produce a polymer of which the terminal is lithium hydride. A reaction was carried out under hydrogen gas supply pressure of 0.7 MPa-G at a reaction solution temperature of 90°C using a catalyst containing titanocene dichloride as a major component. Then, 932 liters of hydrogen gas was added. When hydrogen absorption was completed, the reaction solution was allowed to reach ambient temperature and pressure and discharged from the reaction vessel. The discharged reaction solution was poured into water while stirring and the solvent was removed by steam stripping to obtain a hydrogenated diene polymer (hydrogenated BR-2). Various properties of the hydrogenated diene polymer are shown in Table 3.

(Production of hydrogenated diene polymer (hydrogenated BR-3))

A 50-liter reaction vessel of which the atmosphere was replaced with nitrogen was charged with 28 kg of cyclohexane, 56 g of tetrahydrofuran, 0.57 g of n-butyl lithium, and 1400 g of 1,3-butadiene. The mixture was polymerized under adiabatic conditions starting from a temperature of 50°C. After the completion of the polymerization, hydrogen gas was supplied at a pressure of 0.4 MPa-G and reacted for 20 minutes with stirring to produce a polymer of which the terminal is lithium hydride. A reaction was carried out at a reaction solution temperature of 90°C using a catalyst containing titanocene dichloride as a major component. Then, 932 liters of hydrogen gas was added. When hydrogen absorption was completed, the reaction solution was allowed to reach the ambient temperature and pressure and discharged from the reaction vessel. The discharged reaction solution was poured into water while stirring and the solvent was removed by steam stripping to obtain a hydrogenated diene polymer (hydrogenated BR-3). Various properties of the hydrogenated diene polymer are shown in Table 3.

(Production of hydrogenated diene polymer (hydrogenated BR-4))

A 50-liter reaction vessel of which the atmosphere was replaced with nitrogen was charged with 28 kg of cyclohexane, 61.6 g of tetrahydrofuran, 0.61 g of n-butyl lithium, 0.59 g of piperidine, and 2500 g of 1,3-butadiene. The mixture was polymerized under adiabatic conditions starting from a temperature of 50°C. After the completion of the polymerization, 2.19 g of N,N-bis(trimethylsilyl)aminopropylmethyldiethoxysilane was added to the system and the mixture was reacted for 60 minutes. Next, hydrogen gas was supplied at a pressure of 0.4 MPa-G and reacted for 20 minutes with stirring to produce a polymer of which the terminal is lithium hydride. A reaction was carried out under hydrogen gas supply pressure of 0.7 MPa-G at a reaction solution temperature of 90°C using a catalyst containing titanocene dichloride as a major component. Then, 828 liters of hydrogen gas was added. When hydrogen absorption was completed, the reaction solution was allowed to reach the ambient temperature and pressure and discharged from the reaction vessel. The discharged reaction solution was poured into water while stirring and the solvent was removed by steam stripping to obtain a hydrogenated diene polymer (hydrogenated BR-4). Various properties of the hydrogenated diene

polymer are shown in Table 3.

TABLE 3

| | Hydrogenated BR-1 | Hydrogenated BR-2 | Hydrogenated BR-3 | Hydrogenated BR-4 |
|---|---|---|---|---|
| Modified/unmodified | Unmodified | Modified | Unmodified | Modified |
| Mw ($\times$ $10^4$) | 139 | 28 | 27 | 21 |
| Mw/Mn | 2.8 | 1.07 | 1.05 | 1.07 |
| Vinyl bond content (%) (of unhydrogenated polymer) | 38.8 | 37.6 | 35.4 | 38.6 |
| Functional group content (2) ($10^{-2}$ mmol/g) | - | 4.7 | - | 4.0 |
| Hydrogenation degree (%) | 95.2 | 93.6 | 94.2 | 82.4 |

Example 11 **(Reference)**

A hexane solution of the hydrogenated BR-1 (containing 75 parts of the hydrogenated BR-1) and a hexane solution of the hydrogenated BR-2 (containing 25 parts of the hydrogenated BR-2) were mixed. The mixed solution was poured into water while stirring. The solvent was removed by steam stripping to obtain a blend polymer. 5 parts of zinc oxide, 0.5 parts of stearic acid, 30 parts of silica, 3 parts of a coupling agent, 5 parts of SRF carbon, and 40 parts of a softener were added to the blend polymer (100 parts) and kneaded at 150°C for five minutes using a 250 ml Plast-mill to obtain a mixture. 5 parts of a crosslinking agent and 0.2 parts of a crosslinking adjuvant were added to the mixture and kneaded with an open roller at 50 to 70°C for five minutes to obtain a compounded rubber composition. The previously-mentioned components ((1) to (9)) were used as various additives.

The compounded rubber composition obtained was heated at 170°C under a pressure of 150 kgf/$cm^2$ for 20 minutes using a press molding machine to prepare a test specimen (vulcanized rubber sheet) having a thickness of 2 mm. Processability of the test specimen was rated as "Good", tensile stresses was 1.3 MPa (100% modulus) and 5.9 MPa (300% modulus), tensile breaking strength ($T_B$) was 15.5 MPa, tensile breaking elongation ($E_B$) was 480%, a hardness (Duro A) was 54, and compression set of 19%.

The compounded rubber composition was heated for 20 minutes to prepare a block test specimen for a viscoelasticity test. The dynamic modulus of elasticity of the block test specimen was 1.45 MPa (70 Hz) or 1.09 MPa (0.1 Hz), and the static-dynamic ratio was 1.33.

Example 12

A hexane solution of the hydrogenated BR-1 (containing 50 parts of the hydrogenated BR-1) and a hexane solution of the hydrogenated BR-2 (containing 50 parts of the hydrogenated BR-2) were mixed. The mixed solution was poured into water while stirring. The solvent was removed by steam stripping to obtain a blend polymer. 5 parts of zinc oxide, 0.5 parts of stearic acid, 30 parts of silica, 3 parts of a coupling agent, 5 parts of SRF carbon, and 40 parts of a softener were added to the blend polymer (100 parts) and kneaded at 150°C for five minutes using a 250 ml Plast-mill to obtain a mixture. After the addition of 5 parts of a crosslinking agent and 0.2 parts of a crosslinking adjuvant, the mixture was kneaded at 50 to 70°C for five minutes using an open roller to obtain a compounded rubber composition. The previously-mentioned components ((1) to (9)) were used as various additives. A test specimen (vulcanized rubber sheet) and a block test specimen were prepared in the same manner as in Example 11 using the obtained compounded rubber composition. The properties of the test specimen (vulcanized rubber sheet) and the block test specimen are shown in Table 4.

Example 13 **(Reference)**

A hexane solution of the hydrogenated BR-1 (containing 75 parts of the hydrogenated BR-1) and a hexane solution of the hydrogenated BR-3 (containing 25 parts of the hydrogenated BR-2) were mixed. The mixed solution was

poured into water while stirring. The solvent was removed by steam stripping to obtain a blend polymer. 5 parts of zinc oxide, 0.5 parts of stearic acid, 30 parts of silica, 3 parts of a coupling agent, 5 parts of SRF carbon, and 40 parts of a softener were added to the blend polymer (100 parts) and mixed at 150°C for five minutes using a 250 ml Plast-mill to obtain a mixture. After the addition of 5 parts of a crosslinking agent and 0.2 parts of a crosslinking adjuvant, the mixture was kneaded at 50 to 70°C for five minutes using an open roller to obtain a compounded rubber composition. The previously-mentioned components ((1) to (9)) were used as various additives. A test specimen (vulcanized rubber sheet) and a block test specimen were prepared in the same manner as in Example 11 using the obtained compounded rubber composition. The properties of the test specimen (vulcanized rubber sheet) and the block test specimen are shown in Table 4.

Example 14 (Reference)

A hexane solution of the hydrogenated BR-1 (containing 75 parts of the hydrogenated BR-1) and a hexane solution of the hydrogenated BR-4 (containing 25 parts of the hydrogenated BR-2) were mixed. The mixed solution was poured into water while stirring. The solvent was removed by steam stripping to obtain a blend polymer. 5 parts of zinc oxide, 0.5 parts of stearic acid, 30 parts of silica, 3 parts of a coupling agent, 5 parts of SRF carbon, and 40 parts of a softener were added to the blend polymer (100 parts) and kneaded at 150°C for five minutes using a 250 ml Plast-mill to obtain a mixture. After the addition of 5 parts of a crosslinking agent and 0.2 parts of a crosslinking adjuvant, the mixture was kneaded at 50 to 70°C for five minutes using an open roller to obtain a compounded rubber composition. The previously-mentioned components ((1) to (9)) were used as various additives. A test specimen (vulcanized rubber sheet) and a block test specimen were prepared in the same manner as in Example 11 using the obtained compounded rubber composition. The properties of the test specimen (vulcanized rubber sheet) and the block test specimen are shown in Table 4.

Comparative Example 5 and Examples 15 to 17 (Example 16: Reference)

Compounded rubber compositions, test specimens (vulcanized rubber sheets), and block test specimens were prepared in the same manner as in Example 11, except 49 for changing the formulation as shown in Table 4. The properties of the test specimens (vulcanized rubber sheets) and the block test specimens are shown in Table 4.

TABLE 4

| | | Examples | | | | Comparative Example | Examples | | |
|---|---|---|---|---|---|---|---|---|---|
| | | 11* | 12 | 13* | 14* | 5 | 15 | 16* | 17 |
| Formulation (part) | Hydrogenated BR-1 | 75 | 50 | 75 | 75 | 100 | | | |
| | Hydrogenated BR-2 | 25 | 50 | | | | 100 | | |
| | Hydrogenated BR-3 | | | 25 | | | | 100 | |
| | Hydrogenated BR-4 | | | | 25 | | | | 100 |
| | Zinc oxide | 5 | 5 | 5 | 5 | 5 | 5 | 5 | 5 |
| | Stearic acid | 0.5 | 0.5 | 0.5 | 0.5 | 0.5 | 0.5 | 0.5 | 0.5 |
| | Silica | 30 | 30 | 30 | 30 | 30 | 30 | 30 | 30 |
| | Coupling agent | 3 | 3 | 3 | 3 | 3 | 3 | 3 | 3 |
| | SRF carbon | 5 | 5 | 5 | 5 | 5 | 5 | 5 | 5 |
| | Softener | 40 | 40 | 40 | 40 | 40 | 40 | 40 | 40 |
| | Crosslinking agent | 5 | 5 | 5 | 5 | 5 | 5 | 5 | 5 |
| | Crosslinking adjuvant | 0.2 | 0.2 | 0.2 | 0.2 | 0.2 | 0.2 | 0.2 | 0.2 |
| Functional group content (2) ($10^{-2}$ mmol/g) | | 1.2 | 2.4 | - | 1.0 | - | 4.7 | - | 4.0 |
| Processability | | Good | Excellent | Good | Good | Bad | Excellent | Excellent | Excellent |
| Tensile stress (MPa) | 100% Modulous | 1.3 | 1.4 | 1.5 | 1.5 | 1.3 | 1.6 | 1.8 | 1.6 |
| | 300% Modulous | 5.9 | 5.7 | 5.2 | 6 | 6.1 | 5.4 | 5.1 | 6.5 |
| Tensile breaking strength ($T_B$) (MPa) | | 15.5 | 15.0 | 17.2 | 14.7 | 16.9 | 13.4 | 18.3 | 10.2 |
| Tensile breaking elongation ($E_B$) (%) | | 480 | 470 | 590 | 450 | 500 | 460 | 650 | 430 |
| Hardness (Duro A) | | 54 | 55 | 57 | 55 | 54 | 57 | 62 | 58 |
| Dynamic modulus of elasticity (MPa) | 70 Hz (dynamic distortion 1%) | 1.45 | 1.61 | 2.07 | 1.40 | 1.44 | 1.81 | 2.23 | 1.72 |
| | 0.1 Hz (dynamic distortion 10%) | 1.09 | 1.19 | 1.52 | 1.08 | 1.08 | 1.42 | 1.61 | 1.38 |
| Static-dvnamic ratio | | 1.33 | 1.35 | 1.36 | 1.30 | 1.33 | 1.28 | 1.39 | 1.25 |
| Compression set (CS) (%) 120°C × 70h | | 19 | 25 | 20 | 14 | 16 | 31 | 29 | 12 |
| * Reference | | | | | | | | | |

(Discussion)

From the results shown in Table 4, it is clear that the hydrogenated diene polymer compositions of Examples 11 to 14 have excellent properties equivalent to the hydrogenated diene polymer composition of Comparative Example 5 and better processability. The hydrogenated diene polymer compositions of Examples 11 to 14 had much better heat resistance than the hydrogenated diene polymer compositions of Examples 15 and 16. Although the hydrogenated diene polymer of Example 17 had good processability and heat resistance, tensile breakage and elongation breakage were rather small. The hydrogenated diene polymer compositions of Examples 11 to 14 had excellent processability and heat resistance as well as large values of tensile breakage and elongation breakage.

INDUSTRIAL APPLICABILITY

The hydrogenated diene polymer composition of the present invention can produce a molded rubber article having excellent vibration proofing performance and excellent heat resistance. Therefore, the molded rubber article produced by using the hydrogenated diene polymer composition of the present invention is excellent in vibration proofing performance and heat resistance, and is suitable as a vibration proofing rubber such as an engine mount and a muffler hanger; a hose or a hose cover such as a diaphragm, a roll, a radiator hose, and an air hose; a sealer such as a packing, a gasket, a weather strip, an o-ring, and an oil seal; a belt, a lining, a dust boot, and the like.

## Claims

1. A hydrogenated diene polymer composition comprising:

    (A) a first hydrogenated diene polymer having a weight average molecular weight (Mw) of 100,000 to 1,700,000, a molecular weight distribution (Mw/Mn) of 1.0 to 3.0, and a hydrogenation degree of 72 to 96%, the first hydrogenated diene polymer (A) being obtained by hydrogenating a first diene polymer which has a vinyl bond content of 20 to 70% and being a modified polymer having an amino group and an alkoxysilyl group, and
    (B) a first filler,

    wherein the hydrogenated diene polymer composition contains the first filler (B) in an amount of 5 to 100 parts by mass per 100 parts by mass of the first hydrogenated diene polymer (A).

2. The hydrogenated diene polymer composition according to claim 1, wherein the first diene polymer is a butadiene rubber, a styrene-butadiene rubber, a styrene-butadiene-isoprene random copolymer, or a butadiene-isoprene random copolymer.

3. The hydrogenated diene polymer composition according to claim 1 or 2, wherein the number of the functional group included in one molecular chain of the first hydrogenated diene polymer (A) is 0.1 to 5.0.

4. The hydrogenated diene polymer composition according to any one of claims 1 to 3, wherein the first filler (B) is silica and/or carbon.

5. A molded rubber article made of a crosslinked rubber produced by crosslinking the hydrogenated diene polymer composition according to any one of claims 1 to 4.

## Patentansprüche

1. Hydrierte Dien-Polymerzusammensetzung, die umfasst:

    (A) ein erstes hydriertes Dien-Polymer mit einem gewichtsgemittelten Molekulargewicht (Mw) von 100000 bis 1700000, einer Molekulargewichtsverteilung (Mw/Mn) von 1,0 bis 3,0 und einem Hydrierungsgrad von 72 bis 96%, wobei das erste hydrierte Dien-Polymer (A) erhalten ist durch Hydrieren eines ersten Dien-Polymers, welches einen Vinylbindungsgehalt von 20 bis 70% aufweist und ein modifiziertes Polymer mit einer Aminogruppe und einer Alkoxysilylgruppe ist, und
    (B) einen ersten Füllstoff,

wobei die hydrierte Dien-Polymerzusammensetzung den ersten Füllstoff (B) in einer Menge von 5 bis 100 Massenteilen pro 100 Massenteilen des ersten hydrierten Dien-Polymers (A) enthält.

2. Hydrierte Dien-Polymerzusammensetzung nach Anspruch 1, wobei das erste Dien-Polymer ein Butadienkautschuk, ein Styrol-Butadienkautschuk, ein statistisches Styrol-Butadien-Isopren-Copolymer oder ein statistisches Butadien-Isopren-Copolymer ist.

3. Hydrierte Dien-Polymerzusammensetzung nach Anspruch 1 oder 2, wobei die Anzahl der funktionellen Gruppen, die in einer molekularen Kette des ersten hydrierten Dien-Polymers (A) beinhaltet ist, 0,1 bis 5,0 ist.

4. Hydrierte Dien-Polymerzusammensetzung nach einem der Ansprüche 1 bis 3, wobei der erste Füllstoff (B) Siliciumdioxid und/oder Kohlenstoff ist.

5. Geformter Gummiartikel, der aus einem vernetzten Kautschuk gemacht ist, der durch Vernetzen der hydrierten Dien-Polymerzusammensetzung nach einem der Ansprüche 1 bis 4 hergestellt wird.

## Revendications

1. Composition de polymère de diène hydrogéné comprenant :

(A) un premier polymère de diène hydrogéné ayant une masse moléculaire moyenne en masse (Mw) de 100 000 à 1 700 000, une distribution des masses moléculaires (Mw/Mn) de 1,0 à 3,0, et un degré d'hydrogénation de 72 à 96 %, le premier polymère de diène hydrogéné (A) étant obtenu par hydrogénation d'un premier polymère de diène qui a une teneur en liaisons vinyle de 20 à 70 % et qui est un polymère modifié ayant un groupe amino et un groupe alcoxysilyle, et
(B) une première charge,

dans laquelle la composition de polymère de diène hydrogéné contient la première charge (B) en une quantité de 5 à 100 parties en masse pour 100 parties en masse du premier polymère de diène hydrogéné (A).

2. Composition de polymère de diène hydrogéné selon la revendication 1, dans laquelle le premier polymère de diène est un caoutchouc de butadiène, un caoutchouc de styrène-butadiène, un copolymère statistique de styrène-butadiène-isoprène, ou un copolymère statistique de butadiène-isoprène.

3. Composition de polymère de diène hydrogéné selon la revendication 1 ou 2, dans laquelle le nombre de groupes fonctionnels inclus dans une chaîne moléculaire du premier polymère de diène hydrogéné (A) est de 0,1 à 5,0.

4. Composition de polymère de diène hydrogéné selon l'une quelconque des revendications 1 à 3, dans laquelle la première charge (B) est de la silice et/ou du carbone.

5. Article en caoutchouc moulé fait d'un caoutchouc réticulé produit par réticulation de la composition de polymère de diène hydrogéné selon l'une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004067831 A
- JP 2004083622 A
- US 2005171276 A1
- EP 1306393 A1
- JP 1275605 A
- JP 5271326 A
- JP 5271325 A
- JP 5222115 A
- JP 11292924 A
- JP 2000037632 A
- JP 59133203 A
- JP 63005401 A
- JP 62218403 A
- JP 7090017 A
- JP 4319960 B
- JP 47040473 B


### Non-patent literature cited in the description


- *Analy. Chem.,* 1952, vol. 564